(19) Europäisches Patentamt
European Patent Office
Office européen des brevets

(11) **EP 4 386 887 A1**

(12) **EUROPEAN PATENT APPLICATION**
published in accordance with Art. 153(4) EPC

(43) Date of publication:
**19.06.2024 Bulletin 2024/25**

(21) Application number: **22884121.9**

(22) Date of filing: **21.10.2022**

(51) International Patent Classification (IPC):
*H01M 4/131* [(2010.01)]   *H01M 4/133* [(2010.01)]
*H01M 4/36* [(2006.01)]   *H01M 4/48* [(2010.01)]
*H01M 4/38* [(2006.01)]   *H01M 4/525* [(2010.01)]
*H01M 4/505* [(2010.01)]   *H01M 10/0587* [(2010.01)]
*H01M 10/052* [(2010.01)]   *H01M 4/62* [(2006.01)]

(52) Cooperative Patent Classification (CPC):
**H01M 4/131; H01M 4/133; H01M 4/36; H01M 4/38;
H01M 4/48; H01M 4/505; H01M 4/525; H01M 4/62;
H01M 10/052; H01M 10/0587;** Y02E 60/10;
Y02P 70/50

(86) International application number:
**PCT/KR2022/016210**

(87) International publication number:
**WO 2023/068900 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.10.2021 KR 20210142208
15.12.2021 KR 20210179523**

(71) Applicant: **LG Energy Solution, Ltd.
Seoul 07335 (KR)**

(72) Inventors:
• **KIM, Nam-Won
Daejeon 34122 (KR)**
• **KIM, Jung-Hoon
Daejeon 34122 (KR)**
• **RYU, Duk-Hyun
Daejeon 34122 (KR)**
• **HONG, Sang-Ho
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **CYLINDRICAL SECONDARY BATTERY**

(57)   The present disclosure relates to a cylindrical secondary battery having a high form factor applied to medium and large scale devices including vehicles, and more particularly, to a cylindrical secondary battery with improved fast charging characteristics, reduced swelling caused by side reaction and gas generation, suppressed lithium plating and high capacity characteristics.

FIG. 6a

Artificial graphite
Si
Natural graphite
159μm   159μm

EP 4 386 887 A1

## Description

TECHNICAL FIELD

The present disclosure relates to a cylindrical secondary battery having a large form factor applied to medium and large scale devices including vehicles, and more particularly, to a cylindrical secondary battery with improved fast charging characteristics, reduced swelling caused by side reaction and gas generation, suppressed lithium plating and high capacity characteristics.

The present application claims priority to Korean Patent Application No. 10-2021-0142208 filed on October 22, 2021 and Korean Patent Application No. 10-2021-0179523 filed on December 15, 2021 in the Republic of Korea, the disclosure of which is incorporated herein by reference.

BACKGROUND ART

Due to their characteristics of being easily applicable to various products and electrical properties such as high energy density, secondary batteries are not only commonly applied to portable devices, but universally applied to electric vehicles (EVs) or hybrid electric vehicles (HEVs) that operate by an electric power source.

The secondary batteries can remarkably reduce the use of fossil fuels, and in addition to the primary advantage, they do not generate by-products from the use of energy, so attention is drawn to secondary batteries as a new eco-friendly and energy efficient source of energy.

The types of secondary batteries widely used at present include lithium ion batteries, lithium polymer batteries, nickel cadmium batteries, nickel hydrogen batteries, nickel zinc batteries or the like. This unit secondary battery cell, i.e., a unit battery cell has an operating voltage of about 2.5V to 4.5V. Accordingly, when a higher output voltage is required, a plurality of battery cells may be connected in series to form a battery pack. Additionally, the battery pack may be formed by connecting the plurality of battery cells in parallel according to the charge/discharge capacity required for the battery pack. Accordingly, the number of battery cells included in the battery pack and the electrical connection type may be variously set depending on the required output voltage or charge/discharge capacity.

Meanwhile, the types of unit secondary batteries typically include cylindrical, prismatic and pouch-type batteries. Among them, a cylindrical secondary battery includes a jelly-roll type electrode assembly including a positive electrode, a negative electrode and a separator or an insulator, and a battery can accommodating the electrode assembly, wherein the positive electrode and the negative electrode are wound into a jelly roll with the separator interposed between them. Additionally, a strip-type electrode tab is connected to each of the positive electrode and the negative electrode, and the electrode tab electrically connects the electrode assembly to an exposed electrode terminal. However, according to the cylindrical secondary battery having this structure, electric current concentration occurs at the strip-type electrode tab coupled to the positive electrode and/or the negative electrode, causing high resistance and heat, resulting in low current collection efficiency.

However, resistance and heat issues do not arise in small-size cylindrical secondary batteries having 18650(cylindrical secondary battery having diameter of 18mm x height of 65mm) or 21700(cylindrical secondary battery having diameter of 21mm x height of 70mm) form factor as widely used.

However, recently, to meet the longer traveling distance and higher charging speed requirements of electric vehicles, there is a need for the development and use of large-size cylindrical secondary batteries having larger form factor, for example, 46800(cylindrical secondary battery having diameter of 46mm x height of 80mm). Additionally, to improve the fast charging characteristics of the large-size cylindrical secondary batteries, so-called tap-less cylindrical secondary batteries using the current collector of the uncoated portion of the positive electrode and the negative electrode as the electrode tab rather than the strip-type electrode tab are being developed.

The large-size cylindrical secondary batteries show higher capacity characteristics and energy density, and increase the production efficiency and reduce the production cost of cylindrical secondary batteries for electric vehicles. Additionally, the tap-less structure increases the electrical connection area and efficiency of the electrode tab and the electrode terminal, reduces the electric current concentration at the electrode tab, and increases the current collection efficiency, thereby improving the fast charging characteristics.

However, the large-size cylindrical secondary batteries having the tap-less structure may suffer side reaction at each electrode and consequential gas generation since large currents are applied to each of the positive electrode and/or the negative electrode in a short time during fast charging. In particular, to achieve high capacity characteristics and fast charging characteristics, the negative electrode of the large-size cylindrical secondary batteries chiefly comprises silicon-based negative electrode active materials, and the silicon-based active materials may cause large volume changes and side reactions during charging/discharging, and more serious problems may arise such as side reaction and gas generation at the negative electrode and consequential swelling and lithium plating.

Due to these problems, in the large-size cylindrical secondary batteries for use in medium and large scale devices such as vehicles, there is an urgent need for the development of technology to improve the fast charging characteristics and reduce the side reaction, gas generation, swelling and lithium plating occurring at the negative electrode.

## DISCLOSURE

### Technical Problem

The present disclosure is directed to providing a cylindrical secondary battery having a large form factor applicable to medium and large scale devices, as well as improved fast charging characteristics, reduced swelling caused by side reaction and gas generation, suppressed lithium plating and high capacity characteristics.

The present disclosure is further directed to providing a battery pack comprising the cylindrical secondary battery.

### Technical Solution

To solve the above-described problem, according to an aspect of the present disclosure, there is provided a cylindrical secondary battery of the following embodiments.

According to a first embodiment of the present disclosure, there is provided the cylindrical secondary battery comprising an electrode assembly of a jelly-roll shape in which a positive electrode comprising a current collector and a positive electrode active material layer on the current collector and a negative electrode comprising a current collector and a negative electrode active material layer on the current collector are wound with a separator interposed between the positive electrode and the negative electrode; and a battery can accommodating the electrode assembly, wherein the negative electrode active material layer includes a lower layer area in contact with the current collector and comprising a silicon-based compound and natural graphite as an active material, an intermix area in contact with the lower layer area, and comprising a silicon-based compound, natural graphite and artificial graphite as an active material, and an upper layer area in contact with the intermix area, and comprising a silicon-based compound and artificial graphite as an active material, and wherein a diameter is 35mm or more and a height is 75mm or more based on a maximum diameter and a maximum height of the battery can.

According to a second embodiment, in the first embodiment, the positive electrode active material layer may comprise lithium nickel-based transition metal oxide having a nickel content of 80 to 100 mol% based on a total transition metal content as an active material.

According to a third embodiment, in the second embodiment, the lithium nickel-based transition metal oxide may be represented by the following chemical formula 1:

[Chemical formula 1]     $Li_{1+a}(Ni_bCo_cMn_dAl_eM_f)O_2$

wherein in the above chemical formula 1, $-0.1 < a < 0.2$, $0.8 < b < 1.0$, $0.01 \leq c \leq 0.15$, $0.01 \leq d \leq 0.15$, $0.01 \leq e \leq 0.1$, $0 \leq f \leq 0.05$, M is at least one selected from the group consisting of Mg, Ti, Zr, Nb and W.

According to a fourth embodiment, in any one of the first to third embodiments, the negative electrode active material layer may have a thickness of 40 to 200 $\mu$m.

According to a fifth embodiment, in any one of the first to fourth embodiments, the intermix area may have a thickness of 20 to 80% of a total thickness of the negative electrode active material layer based on a cross-sectional thickness at which the intermix area is formed with a largest thickness in the negative electrode active material layer.

According to a sixth embodiment, in any one of the first to fifth embodiments, the lower layer area may have a thickness of 10 to 40% of the total thickness of the negative electrode active material layer.

According to a seventh embodiment, in any one of the first to sixth embodiments, the upper layer area may have a thickness of 10 to 40% of the total thickness of the negative electrode active material layer.

According to an eighth embodiment, in any one of the first to seventh embodiments, the intermix area may comprise the natural graphite and the artificial graphite at a weight ratio of 2 : 8 to 8 : 2 (the natural graphite:the artificial graphite).

According to a ninth embodiment, in any one of the first to eighth embodiments, the intermix area may have such an active material distribution gradient that a distribution ratio of the natural graphite decreases and a distribution ratio of the artificial graphite increases as it is closer to the upper layer area.

According to a tenth embodiment, in any one of the first to ninth embodiments, the natural graphite may have a particulate shape exhibiting a sphericity of more than 0.91 and an average particle size (D50) of 5 to 30,um.

According to an eleventh embodiment, in any one of the first to tenth embodiments, the artificial graphite may comprise secondary particles formed by agglomeration of primary particles and a carbon coating layer formed on surfaces of the secondary particles.

According to a twelfth embodiment, in any one of the first to eleventh embodiments, the carbon coating layer may be included in an amount of 0.5 to 10 weight% based on a total weight of the artificial graphite.

According to a thirteenth embodiment, in any one of the first to twelfth embodiments, the artificial graphite may have an average particle size (D50) of 4 to 32,um.

According to a fourteenth embodiment, in any one of the first to thirteenth embodiments, the silicon-based compound may comprise at least one of Si, SiOx(0<x≤2) or Si-Y alloy (the Y is an element selected from the group consisting of alkali metals, alkali earth metals, Group 13 elements, Group 14 element except Si, transition metals, rare earth elements and a combination thereof).

According to a fifteenth embodiment, in any one of the first to fourteenth embodiments, the silicon-based compound may be included in an amount of 10 to 50 weight% based on a total amount of the active materials included in the negative electrode active material layer.

According to a sixteenth embodiment, in any one of the first to fifteenth embodiments, in the negative electrode active material layer, each of the lower layer area, the intermix area and the upper layer area may comprise the active material, a binder polymer and a conductive material, and the lower layer area may comprise the binder polymer of higher content (weight%) than the upper layer area based on a total content (weight%) of each area.

According to a seventeenth embodiment, in any one of the first to sixteenth embodiments, the lower layer area may comprise 1 to 1.2 weight% of the binder polymer based on the total content (weight%), and the upper layer area may comprise 0.5 to 0.9 weight% of the binder polymer based on the total content (weight%).

According to an eighteenth embodiment, in any one of the first to seventeenth embodiments, the lower layer area and the upper layer area may comprise same or different binder polymers, and the binder polymer of the lower layer area may comprise styrene butadiene rubber (SBR), or a mixture of styrene butadiene rubber (SBR) and an acrylic copolymer.

According to a nineteenth embodiment, in the eighteenth embodiment, in the case of the mixture of the styrene butadiene rubber (SBR) and the acrylic copolymer, the styrene butadiene rubber may be included in a larger amount than the acrylic copolymer.

According to a twentieth embodiment, in any one of the first to nineteenth embodiments, the binder polymer of the upper layer area may comprise core-shell particles comprising a core of styrene butadiene rubber, and a shell of an acrylic copolymer around the core; or a mixture of the core-shell particles and styrene butadiene rubber.

According to a twenty first embodiment, in the twentieth embodiment, the binder polymer of the upper layer area may comprise the mixture of the core-shell particles and the styrene butadiene rubber, and the core-shell particles may be included in a larger amount than the styrene butadiene rubber.

According to a twenty second embodiment, in the twentieth or twenty first embodiment, an average particles size (D50) of the core-shell particles may be 30 to 100 nm, and an average particle size of the styrene butadiene rubber may be 200 to 350 nm.

According to a twenty third embodiment, in any one of the first to twenty second embodiments, the negative electrode active material layer may have a QBR(Quantified Binder Ratio) of 2.0 or less, and the QBR may be defined by the following equation:

$$QBR = Bs/Bf$$

wherein Bs denotes an average value of Os atomic ratio in a negative electrode active material layer surface area within 15% of a total thickness of the negative electrode active material layer from an outermost surface of the negative electrode active material layer, and Bf denotes an average value of Os atomic ratio in a negative electrode active material layer bottom area within 15% of the total thickness of the negative electrode active material layer from a negative electrode active material layer interface in contact with the current collector, and

wherein the Os atomic ratio is analyzed by Energy Dispersive X-ray Spectroscopy (EDS) after $OsO_4$ staining of a cross section of the negative electrode active material.

According to a twenty fourth embodiment, in any one of the first to twenty third embodiments, the positive electrode and the negative electrode may have an uncoated portion in which the active material layer is not formed along one side (long side) end of the current collector in a direction parallel to a winding direction, and at least part of the current collector of the uncoated portion may define an electrode tab electrically connected to an electrode terminal.

According to a twenty fifth embodiment, in any one of the first to twenty fourth embodiments, the at least part of the current collector defining the electrode tab may be processed into a plurality of segments which is independently bendable. Additionally, the segments may be connected to the electrode terminal with a wide contact area, and the cylindrical secondary battery may have a structure of a tab-less secondary battery.

According to a twenty sixth embodiment, in any one of the first to twenty fifth embodiments, a ratio of a form factor defined as a value obtained by dividing a diameter by a height may be larger than 0.4.

According to a twenty seventh embodiment, in any one of the first to twenty sixth embodiments, the cylindrical secondary battery may be a 46110 cell, a 48750 cell, a 48110 cell, a 48800 cell or a 46800 cell.

According to a twenty eighth embodiment, there is provided a battery pack comprising the cylindrical secondary battery according to any one of the first to twenty seventh embodiments.

According to a twenty ninth embodiment, there is provided a vehicle comprising the battery pack according to the twenty eighth embodiment.

Advantageous Effects

According to the present disclosure, in the cylindrical secondary battery having a large form factor with the diameter of 35mm or more and the height of 75mm or more, the negative electrode active material layer is divided into at least three areas according to the active material distribution.

As the negative electrode active material layer is divided according to the active material distribution, even though a larger electric current is applied in a short time during fast charging, it is possible to suppress side reaction and gas generation between the negative electrode and the electrolyte solution in the cylindrical secondary battery, thereby significantly reducing swelling, electrolyte solution consumption and lithium plating. Additionally, since a large amount of natural graphite is distributed in the lower layer area and the intermix area adjacent to the lower layer area, the active material layer may have high adhesion strength to the current collector and good mechanical properties.

Accordingly, the cylindrical secondary battery according to the present disclosure may have a larger form factor as well as improved fast charging characteristics, reduced side reaction and gas generation and suppressed swelling and lithium plating, and may be very preferably applied as secondary batteries for medium and large scale devices such as vehicles requiring high capacity characteristics and fast charging characteristics.

BRIEF DESCRIPTION OF THE DRAWINGS

The accompanying drawings illustrate exemplary embodiments of the present disclosure and, together with the foregoing disclosure, serve to provide further understanding of the technical aspect of the present disclosure. However, the present disclosure is not to be construed as being limited to the drawings.

FIG. 1 is a plan view showing schematically an example of a positive or negative electrode included in a cylindrical secondary battery of an embodiment.
FIG. 2 is a cross-sectional view showing schematically an example of an electrode assembly included in a cylindrical secondary battery of an embodiment.
FIG. 3 is an exploded perspective view showing schematically an example of a cylindrical secondary battery of an embodiment.
FIG. 4 is a diagram showing schematically an example of a battery pack included in a cylindrical secondary battery of an embodiment.
FIG. 5 is a diagram showing schematically a vehicle including a battery pack.
FIGS. 6a and 6b are cross-sectional scanning electron microscopy (SEM) images of a negative electrode in a cylindrical secondary battery of example 1.
FIG. 6c is a cross-sectional SEM image of a negative electrode in a cylindrical secondary battery of comparative example 1.
FIG. 7 shows an X-ray CT imaging result of a cylindrical secondary battery of example 1.
FIG. 8 shows an X-ray CT imaging result of a cylindrical secondary battery of comparative example 1.
FIG. 9 shows an X-ray CT imaging result of a cylindrical secondary battery of comparative example 2.
FIGS. 10 to 12 are photographic images showing a negative electrode active material layer surface of each secondary battery and a negative electrode active material layer attached to a separator as a result of dissembling cylindrical secondary batteries of example 1 and comparative examples 1 and 2.
FIGS. 13a to 13d are graphs showing the result of performing a fast charging/discharging test on cylindrical secondary batteries of example 1 and comparative example 1 in experimental example 3.
FIG. 14 is a schematic diagram showing the calculation of a QBR value of a negative electrode active material layer.
FIG. 15a is a graph showing a change in normalized intensity of Os stained to a binder polymer of a first negative electrode active material layer extracted and analyzed from EDS mapping at a distance in direction from the surface of the first negative electrode active material layer of a negative electrode of example 1 toward a current collector.
FIG. 15b is a graph showing a change in normalized intensity of Os stained to a binder polymer of a second negative electrode active material layer extracted and analyzed from EDS mapping at a distance in a direction from a surface of the second negative electrode active material layer of a negative electrode of example 1 toward a current collector.

DETAILED DESCRIPTION

Hereinafter, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

According to an embodiment of the present disclosure, there is provided a cylindrical secondary battery comprising an electrode assembly of a jelly-roll shape comprising a positive electrode comprising a current collector and a positive electrode active material layer on the current collector, a negative electrode comprising a current collector and a negative electrode active material layer on the current collector and a separator between the positive electrode and the negative electrode; and a battery can accommodating the electrode assembly, wherein the positive electrode and the negative electrode are wound into a jelly roll with the separator interposed between them, wherein the negative electrode active material layer comprises:

a lower layer area in contact with the current collector, and comprising a silicon-based compound and natural graphite as an active material,

an intermix area in contact with the lower layer area, and comprising a silicon-based compound, natural graphite and artificial graphite as an active material,

an upper layer area in contact with the intermix area, and comprising a silicon-based compound and artificial graphite as an active material, and

wherein the cylindrical secondary battery has a diameter of 35mm or more and a height of 75mm or more based on a maximum diameter and a maximum height of the battery can.

In the cylindrical secondary battery having a large form factor with the diameter of 35mm or more and the height of 75mm or more, the negative electrode active material layer is divided into at least three areas according to the active material distribution.

The cylindrical secondary battery of an embodiment has a larger form factor than the existing cylindrical secondary battery, and the negative electrode active material layer is divided into at least three areas according to the active material distribution. More specifically, the silicon-based compound and the natural graphite are distributed in the lower layer area in contact with the current collector, the silicon-based compound and the artificial graphite are distributed in the upper layer area in contact with the separator, and the intermix area comprising the silicon-based compound, the natural graphite and the artificial graphite is formed between the lower layer area and the upper layer area.

Since the negative electrode active material layer basically comprises the silicon-based compound as the active material, the cylindrical secondary battery of an embodiment may have high capacity characteristics and energy density, and improved fast charging characteristics.

In addition, artificial graphite has more movement paths of lithium ions and higher electrical efficiency than natural graphite and is better for fast charging, and further, has a stable isotropic structure, causing less side reaction and swelling, and improves the life characteristics of the secondary battery. On the contrary, natural graphite has poorer characteristics in terms of fast charging characteristics and stability than artificial graphite and may cause more side reactions, but has a larger surface area and reactive sites on the surface, leading to improved adhesion strength to the current collector.

In the cylindrical secondary battery of an embodiment, artificial graphite is primarily distributed in the upper layer area of the active material layer in which electrochemical reaction usually occurs during charging/discharging and the intermix area adjacent to the upper layer area, and natural graphite is primarily distributed in the lower layer area in contact with the current collector and the intermix area adjacent to the lower layer area, thereby maximizing the advantage of the two active materials.

That is, since artificial graphite is distributed near the upper layer area in which electrochemical reaction occurs during charging/discharging, it is possible to suppress side reaction, swelling and lithium plating during charging/discharging, and further improve fast charging characteristics. Additionally, since more stable artificial graphite is distributed in the upper layer area together with the silicon-based compound, it is possible to reduce side reactions and volume changes of the silicon-based compound during charging/discharging. Additionally, since natural graphite is distributed near the lower layer area in contact with the current collector, it is possible to greatly improve the adhesion strength of the negative electrode active material layer to the current collector, and improve the overall durability of the secondary battery. Further, since natural graphite and artificial graphite are present in the intermix area together, it is possible to provide the large-size cylindrical secondary battery for maximizing the advantage of each of the above-described active material, increasing the storage capacity of lithium ions due to the large surface area, and achieving higher capacity characteristics and energy density.

As a result, in the cylindrical secondary battery of an embodiment, due to the above-described characteristics, even though a larger electric current is applied in a short time during fast charging, it is possible to suppress side reaction between the negative electrode and the electrolyte solution and gas generation, thereby significantly reducing swelling, electrolyte solution consumption and lithium plating. Additionally, the active material layer may have high adhesion strength to the current collector and good mechanical properties.

Accordingly, the cylindrical secondary battery of an embodiment may have a larger form factor as well as improved fast charging characteristics, reduced side reaction and gas generation and suppressed swelling and lithium plating, and may be very preferably applied as secondary batteries for medium and large scale devices such as vehicles requiring high capacity characteristics and fast charging characteristics.

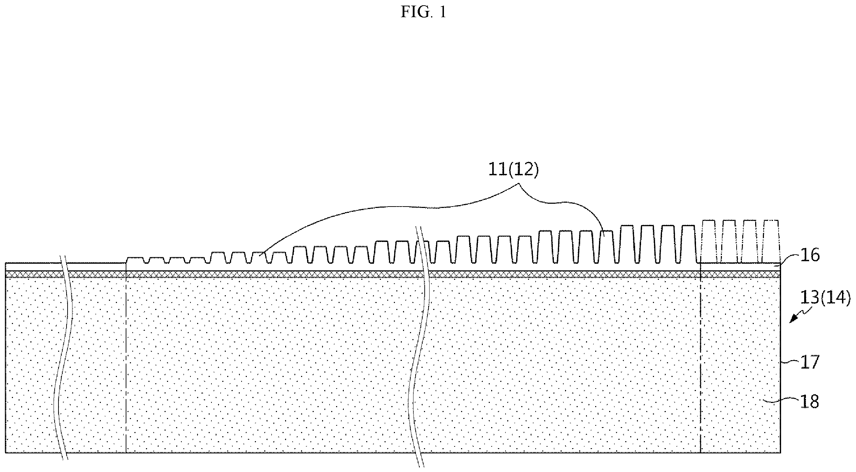

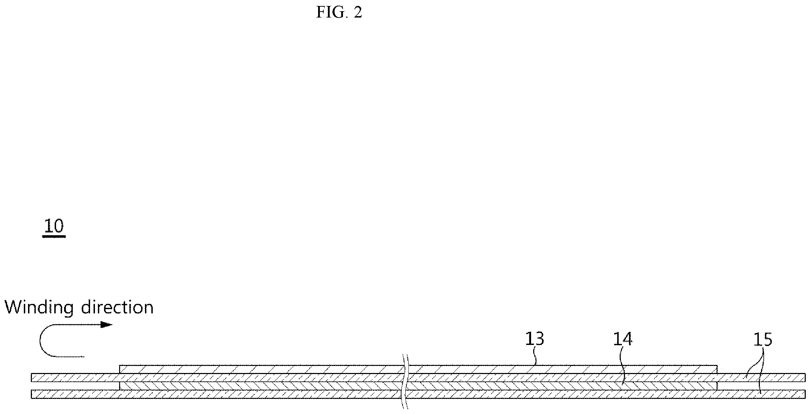

Hereinafter, each component of the cylindrical secondary battery of an embodiment will be described in more detail with reference to the accompanying drawings. FIG. 1 is a plan view showing schematically an example of the positive or negative electrode included in the cylindrical secondary battery of an embodiment, and FIG. 2 is a cross-sectional view showing schematically an example of the electrode assembly included in the cylindrical secondary battery of an embodiment.

As shown in FIGS. 1 and 2, the cylindrical secondary battery comprises the electrode assembly 10 of the jelly-roll shape in which positive and negative electrodes 13,14 comprising the current collector 17 and the positive or negative electrode active material layer 18 on the current collector 17 are wound with the separator 15 interposed between the positive and negative electrodes 13,14.

In this instance, the positive and negative electrodes 13,14 may have an uncoated portion 16 in which the active material layer18is not formed along one side (long side) end of each current collector 17 in a direction parallel to the winding direction, and at least part of the current collector 17 of the uncoated portion 16 may define each electrode tab 11, 12 of the positive electrode or the negative electrode.

More specifically, referring to FIG. 1, the at least part of the current collector 17 defining each electrode tab 11, 12 is processed into a plurality of segments that is independently bendable. The plurality of segments may have different shapes and sizes for each area, but the present disclosure is not limited to a particular shape and size.

As described in more detail below, the plurality of segments of the uncoated portion 16 may be electrically connected to each electrode terminal and act as the electrode tabs 11, 12, and the cylindrical secondary battery of an embodiment may have a structure of a so-called tap-less secondary battery having no electrode tab. Accordingly, compared to the conventional batteries having the electrode tabs, it is possible to greatly improve the electrical connection area with the electrode terminal and the current collection efficiency and it is favorable for high capacity batteries requiring fast charging.

However, in the cylindrical secondary battery having the tap-less structure and large size, a large current may be applied to each electrode in a short time, so it may be urgently necessary to improve fast charging characteristics and suppress side reaction, swelling and lithium plating. To address this issue, in the cylindrical secondary battery of an embodiment, the negative electrode active material layer may be divided into the lower layer area, the intermix area and the upper layer area.

Each area of the negative electrode active material layer and its thickness may be determined by scanning electron microscope (SEM) analysis of the cross section of the corresponding active material layer. Additionally, the thickness of each area may be calculated by measuring the thickness of each area on the basis of the cross sectional thickness at a region in which the intermix area is formed with the largest thickness in the entire active material layer on the SEM image of the active material layer.

In a specific embodiment, the total thickness of the negative electrode active material layer is not limited to a particular range, but may be, for example, 40 to 200,um.

Among them, the thickness of the intermix area in which the natural graphite and the artificial graphite are present together may be 20 to 80%, or 30 to 70%, or 40 to 60% of the total thickness of the negative electrode active material layer, the thickness of the lower layer area may be 10 to 40%, or 15 to 35%, or 20 to 30%of the total thickness of the negative electrode active material layer, and the thickness of the upper layer area may be 10 to 40%, or 15 to 35%, or 20 to 30%of the total thickness of the negative electrode active material layer.

In a more specific example, the thickness of each of the upper and/or lower layer area may be 5 to 100$\mu$m, or 10 to 60$\mu$m, and the thickness of the intermix area may be 20 to 180$\mu$m, or 25 to 150$\mu$m.

Since the distribution area of the natural graphite and the artificial graphite is controlled by the thickness of each area, it is possible to further improve fast charging characteristics of the cylindrical secondary battery of an embodiment, suppress side reaction, gas generation, swelling and lithium plating at the negative electrode, and achieve high capacity and life characteristics of the cylindrical secondary battery.

In the negative electrode active material layer, the intermix area may comprise the natural graphite and the artificial graphite at a weight ratio (natural graphite : artificial graphite) of 2 : 8 to 8 : 2, or 3 : 7 to 7 : 3, or 4 : 6 to 6: 4. Additionally, the intermix area may have such an active material distribution gradient that the distribution ratio of the natural graphite decreases, and the distribution ratio of the artificial graphite increases as it is closer to the upper layer area. Due to the mix ratio and distribution gradient in the intermix area, it is possible to maximize the effect of the natural graphite and the artificial graphite present in the intermix area together.

Meanwhile, the negative electrode active material layer comprises, as the active material, the artificial graphite, the natural graphite and the silicon-based compound for each area.

Among them, the artificial graphite is produced by mixing cokes with a binder and sintering and heating at high temperature of 2,500°C or more, so the internal structure is uniform and stable by intentionally increasing the crystallinity in the production process. When compared with the natural graphite, it does not accommodate a large amount of lithium ions, but is suitable for fast charging due to more movement paths of lithium ions and has a relative long charge/discharge life advantage.

However, the artificial graphite is usually used in the shape of secondary particles, and to this end, in general, secondary particle type artificial graphite may be obtained by making a material of primary particles, for example, cokes into secondary particles, followed by graphitization through thermal treatment. According to the commonly used manufacturing method that fails to control the size of the primary particles, fine powder which is not created into particles or fine powder separated from the secondary particles after particle formation may exist in large amounts. Accordingly, the manufactured negative electrode may have low negative electrode bonding strength (resistance against separation of the negative electrode active material particles from the negative electrode) and degradation in high temperature storage performance of the battery. Additionally, since fine powder is included in the secondary particles, the pore resistance of the negative electrode increases due to the nonuniform pores of the negative electrode, resulting in degradation in life characteristics and fast charging performance of the battery. To solve these problems, a process of placing a carbon coating layer on the secondary particles has been used.

In an embodiment of the present disclosure, the artificial graphite may comprise at least one of artificial graphite without the carbon coating layer on the surface, or artificial graphite with the carbon coating layer on the surface.

The artificial graphite is usually produced by carbonization of a raw material, for example, coal tar, coal tar pitch and heavy crude oil at 2,500°C or more, and the graphitization is followed by particle size adjustment such as pulverization and secondary particle formation for use as the negative electrode active material.

The artificial graphite has a random distribution of grains in particles, lower sphericity than the natural graphite and a somewhat sharp shape.

The existing spherical natural graphite has a long movement distance of Li ions based on the active material particles and fewer intercalation sites, and thus its output characteristics may be poorer than secondary particle artificial graphite. Meanwhile, since the secondary particle artificial graphite is produced by making small primary particles into secondary particles of a particle size level that is easy to manufacture the electrode, it is possible to maintain the characteristics of the primary particles, i.e., the short Li movement distance and many intercalation sites, thereby improving fast charging characteristics.

The artificial graphite used in an embodiment of the present disclosure may include commercially available mesophase carbon microbeads (MCMB), mesophase pitch-based carbon fiber (MPCF), artificial graphite graphitized in the shape of a block and artificial graphite graphitized in the shape of powder, and the sphericity of the artificial graphite may be 0.91 or less, or 0.6 to 0.91, or 0.7 to 0.9.

The artificial graphite of secondary particles without the carbon coating layer may be formed by granulation of the primary particles. That is, the secondary particles may be agglomerates of the primary particles through the granulation process.

The artificial graphite of secondary particles with the carbon coating layer on the surface may comprise at least one of amorphous carbon or crystalline carbon as the carbon coating layer.

The crystalline carbon may further improve the conductivity of the negative electrode active material.

The crystalline carbon may comprise at least one selected from the group consisting of fluorene, carbon nanotubes and graphene.

The amorphous carbon may properly maintain the strength of the coating layer, thereby improving the output characteristics and fast charging performance of the artificial graphite. The amorphous carbon may be a carbide of at least one selected from the group consisting of tar, pitch and other organics, or a carbon-based material formed using hydrocarbon as a source of chemical vapor deposition method.

The carbide of other organics may be a carbide of an organic matter selected fromsucrose, glucose, galactose, fructose, lactose, mannose, ribose, aldohexose, ketohexose and a combination thereof.

The hydrocarbon may be a substituted or unsubstituted aliphatic or alicyclic hydrocarbon, a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane or hexane. The aromatic hydrocarbon of the substituted or unsubstituted aromatic hydrocarbon may be benzene, toluene, xylene, styrene, ethylbenzene, diphenylmethane, naphthalene, phenol, cresol, nitrobenzene, chlorobenzene, indene, cumarone, pyridine, anthracene or phenanthrene.

The carbon coating layer may be included in an amount of 0.5 weight% to 10.0 weight% based on the total weight of the artificial graphite with the carbon coating layer, and specifically 1 weight% to 8 weight%, or 2 to 6 weight%.

When the above-described range is satisfied, it is possible to ensure the capacity per weight of the negative electrode active material particles and improve fast charging performance of the artificial graphite.

D50 of the artificial graphite without the carbon coating layer on the surface may be 5,urn to 35$\mu$m, specifically 7$\mu$m to 33$\mu$m, and more specifically 10$\mu$m to 30$\mu$m.

D50 of the artificial graphite with the carbon coating layer on the surface may be 4,um to 32$\mu$m, specifically 6$\mu$m to 30$\mu$m, and more specifically 8$\mu$m to 28$\mu$m, or 8$\mu$m to 21$\mu$m.

In the present disclosure, the average particle size D50 refers to the particle size at 50% in the cumulative particle size distribution. The D50 may be measured using a laser diffraction method. Specifically, after powder to be measured is dispersed in a dispersion medium and introduced into commercially available laser diffraction particle size measurement equipment (for example, Microtrac S3500), the particle size distribution is calculated by measuring a diffraction pattern difference according to the particle size when particles pass through a laser beam. The D50 may be measured by calculating the particle diameter at 50% in the cumulative particle size distribution in the measurement equipment.

Meanwhile, the natural graphite may be, in general, platy agglomerate before processing, i.e., scaly natural graphite. The scaly natural graphite is produced from natural graphite raw material(for example, collected from graphite mine), and specifically, may be produced by pulverizing the natural graphite raw material, followed by impurity removal by base treatment and/or acid treatment, washing, drying, sieving.

The natural graphite may be spherical. The spherical natural graphite may be produced by making the scaly natural graphite into a spherical shape. For example, Vortex flow pulverizer may be used to make into a spherical shape. When the natural graphite is spherical, it is possible to improve the packing between the active material particles, and significantly reduce the thickness expansion of the negative electrode active material during charging/discharging.

The sphericity of the natural graphite used in an embodiment of the present disclosure may be more than 0.91 and 0.97 or less, or 0.93 to 0.97, or 0.94 to 0.96.

The natural graphite may have the average particle size D50 of 5 to 30$\mu$m, or 10 to 25$\mu$m.

The natural graphite easily deforms when it is pressed due to its soft properties, which makes it easy to increase the packing ratio, and it is advantageous to ensure the contact area between active materials and the bonding strength. However, from the perspective of the electrode structure, it is difficult to maintain pores, causing clogged pores on the electrode surface or closed pores inside, resulting in poor electrolyte solution wetting. Meanwhile, the artificial graphite is less likely to be pressed due to its hard properties, and has a smaller contact area between active materials than the natural graphite and a consequential decrease in bonding strength. In contrast, the artificial graphite is easy to maintain pores and can form an electrode structure with improved electrolyte solution wetting.

In the above-described embodiment, to exert both the advantage of the natural graphite and the advantage of the artificial graphite, the distribution gradient of the natural graphite and the artificial graphite in the active material layer is controlled.

Among them, since the artificial graphite is included in the upper layer area of the negative electrode active material layer or the intermix area adjacent to the upper layer area, it is possible to improve electrolyte solution wetting and ensure the bonding strength due to the binder migration in the manufacture of the electrode, and since the natural graphite is included in the lower layer area or the intermix area adjacent to the lower layer area, it is still possible to ensure the bonding strength due to the active material characteristics of the natural graphite itself, even though the binder migration to the upper layer area occurs.

In general, fast charging may show a step charging feature in a large concept since the current density gradually decreases from the initial high level. The negative electrode included in the secondary battery of the above-described embodiment may improve the fast charging performance in view of the characteristics of the electric current during fast charging. The overall electrode structure is such that secondary artificial graphite having good fast charging performance is present on the electrode surface to which Li ions move, thereby improving electrolyte solution wetting, and when a large amount of Li ions move at the early stage, charging is performed fast from the surface, which reduces the density of Li ions moving to the current collector, thereby reducing the charging burden of the natural graphite. Subsequently, at the stage in which the current density decreases, charging may be smoothly performed.

Meanwhile, to form the intermix area in which the natural graphite and the artificial graphite are present together in the negative electrode active material layer, the negative electrode active material layer may be formed by coating a slurry for the lower layer area comprising a first negative electrode active material (the natural graphite and the silicon-based compound) and a slurry for the upper layer area comprising a second negative electrode active material (the artificial graphite and the silicon-based compound)on the current collector at the same time or continuously at a very short time interval, and subsequently, drying at the same time. In this instance, the time interval between the step of coating each slurry may be 1 hour or less, 50 min or less, 40 min or less, 30 min or less, 20 min or less, 10 min or less, 5 min or less, or 30 sec or less. Through the control of the time interval, it is possible to further improve the overall characteristics of the secondary battery of an embodiment by optimizing a thickness ratio of the intermix area.

Meanwhile, the silicon-based compound included as the active material together with the natural graphite and the artificial graphite may comprise at least one of Si, SiOx(0<x≤2) or Si-Y alloy(the Y is an element selected from the group consisting of alkali metals, alkali earth metals, Group 13 elements, Group 14 element except Si, transition metals, rare earth elements and a combination thereof). Additionally, a mixture of SiO2 and at least one of them may be used.

The Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, or Po. Specifically, the silicon-based compound may be $SiO_x(0<x≤2)$.

The silicon-based compound may be included in an amount of 10 to 50 weight%, or 10 to 30 weight% based on the total amount of the active material included in the negative electrode active material layer. More specifically, a weight ratio of the natural graphite and the silicon-based compound in the negative electrode active material of the lower layer area may be 1:1 to 10:1, or 1:1 to 10:3. Additionally, a weight ratio of the artificial graphite and the silicon-based compound in the negative electrode active material of the upper layer area may be 1:1 to 10:1, or 1:1 to 10:3. In addition, in the intermix area, a weight ratio of the sum of the natural graphite and the artificial graphite, and the silicon-based compound may be 1:1 to 10:1, or 1:1 to 10:3.

When the weight ratio of each of the natural graphite and/or the artificial graphite and the silicon-based compound satisfies the above-described range, it is possible to ensure high capacity and high energy density of the secondary battery. When the natural graphite or the artificial graphite is included in excess beyond the above-described weight ratio range, the energy density of the battery may decrease, and when the silicon-based compound is included in excess beyond the above-described weight ratio range, the durability of the battery may decrease and side reaction may increase.

Meanwhile, in an embodiment of the present disclosure described above, the negative electrode current collector used as a substrate for forming the negative electrode active material layer is not limited to a particular type and may include any material having conductive properties without causing any chemical change to the battery, and may include, for example, copper, stainless steel, aluminum, nickel, titanium, sintered carbon, copper or stainless steel treated with carbon, nickel, titanium or silver on the surface and an aluminum-cadmium alloy.

Although not limited to a particular range, the thickness of the current collector may be, in general, 3 to 500 μm.

In addition to the above-described active material, each area of the negative electrode active material layer may comprise a binder polymer and a conductive material. In this instance, the lower layer area and the upper layer area may comprise the binder polymer and the conductive material derived from each slurry for forming them, and the intermix area may comprise a mixture of the binder polymer and the conductive material derived from each slurry.

In this instance, based on the total content(weight%) of each area, the lower layer area may comprise higher binder polymer content (weight%) than the upper layer area. Specifically, the lower layer area may comprise 1 to 1.2 weight% or 1 to 1.6 weight% of the binder polymer based on the total content (weight%), and the upper layer area may comprise 0.5 to 0.9 weight% or 0.4 to 0.85 weight% of the binder polymer based on the total content (weight%).

In this instance, when a ratio of weight% of the binder polymer in the lower layer area and weight% of the binder polymer in the upper layer area meets the above-described relationship and range, it is possible to achieve high adhesion strength and fast charging performance.

Each binder polymer included in the negative electrode active material layer may independently include various types of binder polymers such as polyvinylidene fluoride-hexafluoropropylene copolymer (PVDF-co-HEP), polyvinylidenefluoride, polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, styrene butadiene rubber (SBR), fluoro rubber, and an acrylic copolymer. In this instance, the binder polymer included in each of the lower layer area and the upper layer area or the slurry for forming them may be the same or different.

Additionally, among the exemplary binder polymers, carboxymethyl cellulose (CMC), carboxyethyl cellulose and polyvinylpyrrolidone may serve as a thickener for further improving the dispersion stability of the slurry.

According to an embodiment of the present disclosure, the binder polymer included primarily in the lower layer area of the negative electrode active material layer may be styrene butadiene rubber (SBR) alone or in combination with an acrylic copolymer.

In this instance, the acrylic copolymer may comprise at least one of an acrylic acid ester-based copolymer or an acrylonitrile copolymer. Specifically, the acrylic acid ester-based copolymer may be a copolymer comprising a repeating unit derived from a methacrylic acid ester-based monomer; and a repeating unit derived from at least one of a styrene-based monomer, a vinyl cyan-based monomer, a methacrylamide-based monomer or an unsaturated carboxylic acid-based monomer. Additionally, the acrylonitrile-based copolymer may be a copolymer comprising a repeating unit derived from an acrylonitrile monomer; and a repeating unit derived from at least one of a methacrylic acid ester-based monomer, an ethylenically unsaturated carboxylic acid ester-based monomer, an unsaturated carboxylic acid-based monomer, a conjugated diene-based monomer, a methacrylamide-based monomer or a nitrile-based monomer.

Additionally, when the binder polymer for the lower layer area is the mixture of the styrene butadiene rubber and the acrylic copolymer, the amount of the styrene butadiene rubber in the binder polymer may be larger than the amount of the acrylic copolymer. Specifically, a weight ratio of the styrene butadiene rubber and the acrylic copolymer in the binder polymer for the lower layer area may be 51:49 to 99:1, or 70:30 to 99:1. When the amount of the styrene butadiene rubber in the binder polymer is larger than the amount of the acrylic copolymer and the weight ratio range is satisfied, it is possible to achieve high bonding strength.

Additionally, the binder polymer included primarily in the upper layer area of the negative electrode active material layer may be core-shell particles alone, each comprising a core of styrene butadiene rubber and a shell of an acrylic copolymer around the core, or a mixture of the core-shell particles and styrene butadiene rubber.

When the binder polymer for the upper layer area is the mixture, the amount of the core-shell particles may be larger than the amount of the styrene butadiene rubber. Specifically, a weight ratio of the core-shell particles and the styrene butadiene rubber in the binder polymer may be 51:49 to 99:1, or 70:30 to 99:1. When the amount of the core-shell particles in the binder polymer is larger than the amount of the styrene butadiene rubber and the above-described weight ratio range is satisfied, it is possible to prevent electrode roll contamination and increase electrode flexibility, thereby improving electrode process efficiency.

The average particle size of the core-shell particles may be 30 to 100 nm, and the average particle size of the styrene butadiene rubber may be 200 to 350 nm.

When the binder polymer for the upper layer area is the mixture, the average particle size of the styrene butadiene rubber is larger than the average particle size of the core-shell particles, and specifically the average particle size of the core-shell particles and the average particle size of the styrene butadiene rubber satisfy the above-described range, it is possible to prevent electrode roll contamination and increase electrode flexibility, thereby improving electrode process efficiency.

The core-shell particles may comprise the shell in an amount of 10 to 1 parts by weight, or 6 to 2 parts by weight based on 100 parts by weight of the core of the styrene butadiene rubber, the shell being disposed around the core and formed from the acrylic copolymer.

In this instance, the acrylic copolymer of which the shell is made may comprise at least one an acrylic acid ester-based copolymer or an acrylonitrile copolymer. Specifically, the acrylic acid ester-based copolymer may be a copolymer comprising a repeating unit derived from a methacrylic acid ester-based monomer; and a repeating unit derived from at least one of a styrene-based monomer, a vinyl cyan-based monomer, a methacrylamide-based monomer or an unsaturated carboxylic acid-based monomer. Additionally, the acrylonitrile-based copolymer may be a copolymer comprising a repeating unit derived from an acrylonitrile monomer; and a repeating unit derived from at least one of a methacrylic acid ester-based monomer, an ethylenically unsaturated carboxylic acid ester-based monomer, an unsaturated carboxylic acid-based monomer, a conjugated diene-based monomer, a methacrylamide-based monomer or a nitrile-based monomer.

Meanwhile, the conductive material included in each of the lower layer area and the upper layer area is not limited to a particular type and may include any conductive material having conductive properties without causing any chemical change to the corresponding battery, and for example, may include carbon black such as carbon black, acetylene black, ketjen black, channel black, furnace black, lamp black and thermal black; conductive fibers such as carbon fibers or metal fibers; metal powder such as fluorocarbon, aluminum and nickel powder; conductive whiskers such as zincoxide and potassium titanate; conductive metal oxide such as titanium oxide; conductive materials such as polyphenylene derivatives. Additionally, the conductive material included in each of the lower layer area and the upper layer area may be the same or different.

According to an embodiment of the present disclosure, the negative electrode active material layer may have Quantified Binder Ratio (QBR) of 2.0 or less, and the QBR may be defined as the following equation:

$$QBR = Bs/Bf$$

In the above equation, Bs denotes the average value of Os atomic ratio at the negative electrode active material layer surface area within 15% of the total thickness of the negative electrode active material layer from the outermost surface of the negative electrode active material layer, and Bf denotes the average value of Os atomic ratio at the negative electrode active material layer bottom area within 15% of the total thickness of the negative electrode active material layer from the negative electrode active material layer interface in contact with the current collector.

The Os atomic ratio may be determined by staining the binder polymer included in the negative electrode active material layer with $OsO_4$ (osmium tetraoxide),and analyzing the cross section of the negative electrode active material layer by Energy Dispersive X-ray Spectroscopy (EDS). That is, the Os atomic ratio may be determined from an Os signal obtained by the EDS analysis.

According to an embodiment of the present disclosure, the QBR may be calculated by the following method.

First, a target negative electrode for QBR determination is selected, the negative electrode is prepared in 1cm X 1cm size and placed in a container that holds $OsO_4$(osmium tetraoxide), the container is sealed up, and the negative electrode is taken out of the container after 3 hours, placed in a vacuum oven and dried for 48 hours to stain the binder polymer included in the negative electrode active material layer using $OsO_4$.

Subsequently, a cross section the stained negative electrode is prepared using Ar ion milling. EDS mapping is performed to measure the constituent elements in the negative electrode active material layer of the negative electrode cross section using an EDS detector of SEM equipment.

In the EDS mapping results, a line profile is extracted in the thickness-wise direction of the negative electrode active material layer, the average value (Bs) of Os atomic ratio of the Os stained binder polymer of the negative electrode active material layer surface area and the average value (Bf)of Os atomic ratio of the Os stained binder polymer of the negative electrode active material layer bottom area are extracted from the extracted line profile results, and the QBR value is calculated using the following equation.

$$QBR = Bs/Bf$$

In this instance, the negative electrode active material layer surface area is an area within 15% of the total thickness of the negative electrode active material layer from the outermost surface of the negative electrode active material layer in the thickness-wise direction, and the negative electrode active material layer bottom area is an area within 15% of the total thickness of the negative electrode active material layer from the negative electrode active material layer interface in contact with the current collector.

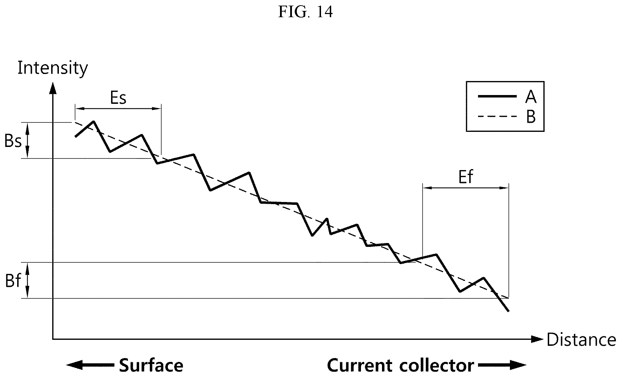

FIG. 14 is a schematic diagram showing the calculation of the QBR value of the negative electrode active material layer.

In this instance, the negative electrode active material layer a negative electrode active material layer surface area (Es)within 15% of the total thickness of the negative electrode active material layer from the outermost surface of the negative electrode active material layer, and an electrode layer bottom area (Ef) within 15% of the total thickness of the negative electrode active material layer from the negative electrode active material layer interface in contact with the current collector on the basis of the total thickness.

Referring to FIG. 14, the X indicates the thickness of the negative electrode active material layer, i.e.,a distance from the surface toward the current collector, and the Y axis indicates the intensity of Os atom. The A line indicates the intensity of Os atom of the Os stained binder polymer in the negative electrode active material layer of the negative electrode cross section, extracted by EDS mapping, and the B line is a trend line indicating the trend of the A line and is a smooth line by LOWESS smoothing, i.e., Locally-Weighted Scatterplot Smoother.

The QBR value is a value indicating the uniformity of thickness-wise distribution of the binder polymer in the negative electrode active material layer through a ratio of the amount of the Os stained binder polymer in the surface area to the amount of the Os stained binder polymer in the bottom area of the negative electrode active material layer. In this instance, the amount of the binder polymer may be inferred through Os atom in the Os stained binder polymer.

According to an embodiment of the present disclosure, the QBR value may be 0.95 or more, 0.97 or more, 1.0 or more, 1.2 or more, 1.5 or more, 1.6 or more, 1.62 or less, 1.7 or less, 1.9 or less, 1.95 or less, 2.0 or less.

When the QBR value satisfies the above-described range, it is possible to suppress the migration of the binder polymer to the negative electrode surface, and achieve uniform binder distribution in the negative electrode active material layer in the thickness-wise direction, thereby improving the adhesion strength between the current collector and the electrode layer, and improving the conductivity on the negative electrode active material layer surface and the charge/discharge rate.

Meanwhile, according to an aspect of the present disclosure, a method for manufacturing the negative electrode comprises:

preparing the slurry for the lower layer area comprising the first negative electrode active material, and the binder polymer, the conductive material and the dispersion medium for the lower layer area; and the slurry for the upper layer area comprising the second negative electrode active material, and the binder polymer, the conductive material and the dispersion medium for the upper layer area;
coating the slurry for the lower layer area on one surface of the negative electrode current collector, and coating the slurry for the upper layer area on the slurry for the lower layer area; and
drying each coated slurry at the same time to form the active material layer. In this instance, to appropriately form the intermix area, in the coating step, it is necessary to coat each slurry continuously or within the predetermined time interval as described above.

The negative electrode active material (the first negative electrode active material, the second negative electrode active material), the binder polymer, the thickener and the conductive material included in each slurry are the same as described above. Additionally, the dispersion medium may independently include N-methylpyrrolidone, acetone and water.

In this instance, the lower layer area is formed from the coated slurry for the lower layer area, the upper layer area is formed from the slurry for the upper layer area and the intermix area is formed by the mixture of them at the above-described predetermined thickness ratio.

A double slot die may be used to coat each slurry. According to an embodiment of the present disclosure, when coating the slurry on the negative electrode the current collector, the coating rate may be 10m/min or more, 20m/min or more, 30m/min or more. When the coating rate of the slurry satisfies the above-described range, drying is performed before the migration of the binder polymer, thereby achieving uniform thickness-wise distribution of the binder polymer in the negative electrode active material layer.

Additionally, the step of drying each coated slurry at the same time to form the active material layer may comprise drying each coated slurry at the same time to remove the dispersion medium from the slurry, rolling, and vacuum drying to form the active material layer.

In this instance, the rolling may be performed by methods commonly used in the technical field pertaining to the present disclosure such as roll pressing, and for example, may be under the pressure of 1 to 20 MPa at the temperature of 15 to 30°C. Additionally, the rolling may be performed in such condition that the porosity of the electrode (active material layer) after rolling is 20 to 40%, or 25 to 35%, or 20 to 30%, or 30 to 40%.

The step of drying the coated slurry may be performed, for example, at 70 to 90°C, or 75 to 85°C, or 80 to 85°C for 10 to 30 min, or 15 to 25 min, or 20 to 30 min, but the drying temperature and time may be properly adjusted according to the type and amount of the dispersion medium.

Additionally, after rolling the dried slurry layer, vacuum drying may be performed at 100 to 170°C, or 120 to 150°C, or 130 to 150°C for about 3 to 10 hours, or 5 to 8 hours, but the drying temperature and time may be properly adjusted according to the type and amount of the dispersion medium.

The negative electrode active material layer may comprise the binder polymer in an amount of 1 to 3 weight%, or 1 to 2 weight%, or 2 to 3 weight% (total percentage).

Meanwhile, the positive electrode included in the secondary battery of an embodiment may be manufactured by mixing the positive electrode active material, a conductive material, a binder and a solvent to prepare a slurry, coating the slurry directly on the positive electrode current collector, or casting on a separate support, and laminating a positive electrode active material film peeled from the support on the positive electrode current collector.

The positive electrode active material may comprise lithium nickel-based transition metal oxide having the nickel content of 80 to 100 mol% based on the total transition metal content. In a specific example, the lithium nickel-based transition metal oxide is represented by the following chemical formula 1,

[Chemical formula 1]  $Li_{1+a}(Ni_bCo_cMn_dAl_eM_f)O_2$

in the above chemical formula 1,

- $0.1 < a < 0.2$, $0.8 \leq b \leq 1.0$, $0.01 \leq c \leq 0.15$, $0.01 \leq d \leq 0.15$, $0.01 \leq e \leq 0.1$, $0 \leq f \leq 0.05$, and Mis at least one selected from the group consisting of Mg, Ti, Zr, Nb and W.

In a more specific example, the nickel content in the lithium nickel-based transition metal oxide may be 80 to 100 mol%, or 85 to 100 mol%, or 88 to 100 mol% based on the total transition metal content.

When the nickel content in the lithium nickel-based transition metal oxide satisfies the range of 80 to 100 mol% based on the total transition metal content, a greater effect works in high loading electrode coated with a large amount of positive electrode active material by controlling the resistance of the bottom SOC area that affects the output of the secondary battery, and may be applied to high-capacity high-density batteries for EVs, and when the nickel content is low beyond the above-described range, there is a problem with capacity.

The positive electrode active material may be monoliths having unimodal characteristics on the particle size distribution curve or secondary particles formed by agglomeration of primary particles through the granulation process. However, in the large-size tap-less cylindrical secondary battery, to improve fast charging characteristics, it is necessary to further reduce the resistance and suppress side reaction and gas generation, and thus it is more desirable to use the monolithic positive electrode active material.

In this instance, theD50 of the monolithic positive electrode active material may be 1μm to 15 μm, or 2μm to 8μm, or 3μm to 7μm, and accordingly it is possible to maximize the reduction effect of resistance, side reaction and gas generation.

In general, the positive electrode current collector is manufactured with the thickness of 3 to 300 μm, and is not limited to a particular type and may include any material having high conductivity without causing any chemical change to the corresponding battery, and may include, for example, one selected from stainless steel, aluminum, nickel, titanium, and aluminum or stainless steel treated with carbon, nickel, titanium or silver on the surface, and specifically, aluminum.

The positive electrode current collector may have microtexture on the surface to improve the adhesion strength to the positive electrode active material, and may come in various types, for example, film, sheet, foil, net, porous body, foam and non-woven.

Meanwhile, the conductive material, the binder polymer and the dispersion medium may be used by appropriately selecting the exemplary ones presented in the manufacture of the negative electrode.

The separator may include a common porous polymer film used as the conventional separator, for example, a porous polymer film made of a polyolefin-based polymer such asan ethylene homopolymer, a propylene homopolymer, an ethylene/butene copolymer, an ethylene/hexene copolymer and an ethylene/methacrylate copolymer, used singly or a stack of them. Additionally, an insulating thin film having high ion permeability and high mechanical strength may be used. The separator may comprise a safety reinforced separator (SRS) having a thin coating layer of ceramics on the separator surface. Besides, a common porous non-woven fabric, for example, nonwoven fabrics made of high melting point glass fibers and polyethylene terephthalate fibers may be used, but the present disclosure is not limited thereto.

The electrolyte solution comprises a lithium salt as an electrolyte and an organic solvent for dissolving it.

The lithium salt may include, without limitation, any lithium salt commonly used in electrolyte solutions for secondary batteries, and for example, an anion of the lithium salt may include one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The organic solvent included in the electrolyte solution may include any commonly used organic solvent without limitation, and may typically include at least one selected from the group consisting of propylene carbonate, ethylene carbonate, diethylcarbonate, dimethylcarbonate, ethylmethylcarbonate, methylpropylcarbonate, dipropylcarbonate, dimethylsulfoxide, acetonitrile, dimethoxyethane, diethoxyethane, vinylene carbonate, sulfolane, gamma butyrolactone, propylene sulfite and tetrahydrofuran.

In particular, among the carbonate-based organic solvents, cyclic carbonate such as ethylenecarbonate and propylenecarbonate is a high viscosity organic solvent and dissolves the lithium salt in the electrolyte well due to high dielectric constant, and more preferably, when the cyclic carbonate is mixed with a low viscosity low dielectric constant linear carbonate such as dimethylcarbonate and diethylcarbonate at an optimal ratio, the electrolyte solution having high electrical conductivity may be prepared.

Optionally, the electrolyte solution may further comprise an additive such as an overcharge inhibitor included in common electrolyte solutions.

Meanwhile, a cylindrical secondary battery according to an embodiment of the present disclosure may be manufactured by interposing the separator 15 between the positive electrode 13 and the negative electrode 14 to form the electrode assembly 10, putting the electrode assembly 10 in the battery case, and injecting the electrolyte.

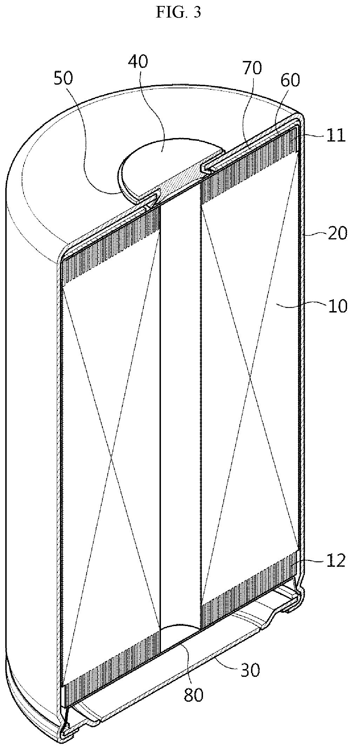

Meanwhile, FIG. 3 shows schematically an example of the entire configuration of the cylindrical secondary battery of an embodiment. As described above with reference to FIGS. 1 and 2, the cylindrical secondary battery of an embodiment basically comprises the electrode assembly 10 of the jelly-roll shape in which the positive and negative electrodes 13, 14are wound in one direction with the separator 15 interposed between the positive and negative electrodes 13,14,whereineach electrode tab 11, 12 is defined by the segments of the uncoated portion 16.

Referring to FIG. 3, the cylindrical secondary battery may further comprise the battery can 20 accommodating the electrode assembly 10 and electrically connected to the electrode assembly 10; a penetrating terminal 40 penetrating a surface of the battery can 20 and electrically connected to the electrode assembly 10; and a cap plate 30 configured to cover the open portion of the battery can 20.

Additionally, the penetrating terminal 40 may be electrically connected to a segment-type electrode tab 11 having positive polarity, and the battery can 20 may be electrically connected to a segment-type electrode tab 12 having negative polarity.

Additionally, the cylindrical secondary battery may further comprise an insulation gasket 50 between the battery can 20 and the penetrating terminal 40 to insulate the penetrating terminal 40 from the battery can 20, and first and second current collector plates 60, 80 electrically connecting the electrode tabs 11, 12, the penetrating terminal 40 and the battery can 20. Additionally, the cylindrical secondary battery may further comprise an insulator 70 between the first current collector plate and the battery can.

The battery of the above-described structure has a structure in which the electrode tab 12 having negative polarity is electrically connected to the battery can 20 through the second current collector plate 80 of a wide area, and the electrode tab 11 having positive polarity is electrically connected to the penetrating terminal 40 through the first current collector plate 60 of a wide area to allow the charges and currents to move through the battery can 20 and the penetrating terminal 40.

Accordingly, since the cylindrical secondary battery of an embodiment has a tap-less battery structure, it is possible to minimize the charge/current movement path during charging/discharging, and improve the fast charging characteristics.

Additionally, the cylindrical secondary battery may be, for example, a large-size cylindrical secondary battery having a ratio of a form factor(defined as a value obtained by dividing the diameter of the secondary battery by its height, wherein the diameter and height are defined from the maximum diameter and the maximum height of the cylindrical battery can, i.e.,a ratio of height(H) to diameter(Φ))of more than approximately 0.4, and for example, may have the diameter of 35mm or more and the height of 75mm or more.

Here, the form factor refers to a value indicating the diameter and height of the cylindrical secondary battery. In a more specific embodiment, the cylindrical secondary battery may be, for example, a 46110 cell, a 48750 cell, a 48110 cell, a 48800 cell or a 46800 cell. In the numbers indicating the form factor, the first two numbers indicate the diameter of the cell, the next two numbers indicate the height of the cell, and the last number 0 indicates that the cell is circular in cross section.

That is, according to specific embodiments, the cylindrical secondary battery of an embodiment may be a cell of an approximately cylindrical shape, for example, a 46110 cell having the diameter of approximately 46mm, the height of approximately 110mm and the ratio of form factor of approximately 0.418, a 48750 cell having the diameter of approximately 48mm, the height of approximately 75mm and the ratio of form factor of approximately 0.640, a 48110 cell having the diameter of approximately 48mm, the height of approximately 110mm and the ratio of form factor of approximately 0.418, a 48800 cell having the diameter of approximately 48mm, the height of approximately 80mm and the ratio of form factor of approximately 0.600, ora 46800 cell having the diameter of approximately 46mm, the height of approximately 80mm and the ratio of form factor of approximately 0.575.

These exemplary batteries are large-size batteries having a larger form factor than the exiting 18650 cell and 21700 cell and which are favorable for fast charging, and may be preferably applied to medium and large scale devices such as vehicles.

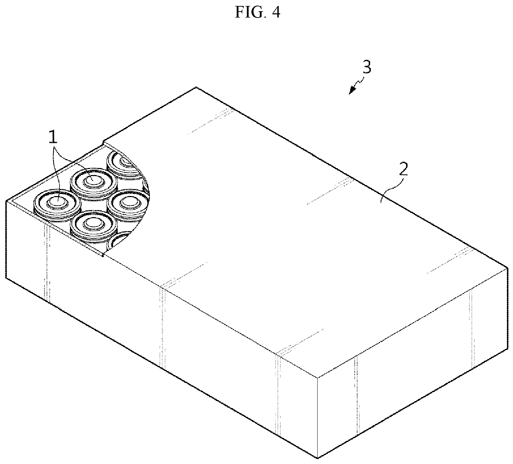

Meanwhile, referring to FIG. 4, a battery pack 3 according to another embodiment of the present disclosure comprises a secondary battery assembly including a plurality of cylindrical secondary batteries 1 according to an embodiment as described above, each electrically connected to each other, and a pack housing 2 accommodating the secondary battery assembly. In the drawings, the components such as the bus bar for electrical connection, a cooling unit and a power terminal are omitted for convenience of illustration.

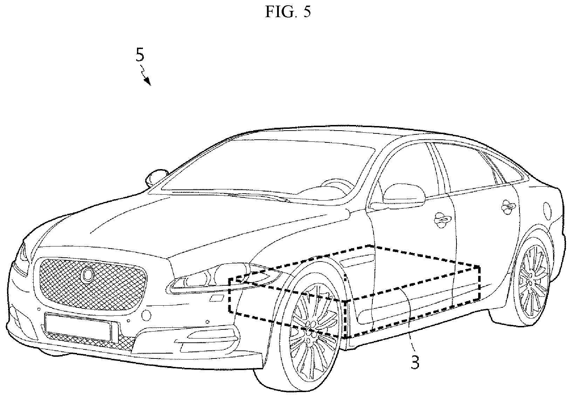

Additionally, referring to FIG. 5, a vehicle 5 according to still another embodiment of the present disclosure may include, for example, an electric vehicle, a hybrid electric vehicle or a plug in hybrid electric vehicle, and comprises the battery pack 3 according to another embodiment. The vehicle 5 comprises a four-wheeled vehicle and a two-wheeled vehicle. The vehicle 5 operates with power from the battery pack 3 according to another embodiment.

Hereinafter, the present disclosure will be described in detail through examples to help understanding of the present disclosure. However, the examples according to the present disclosure may be modified in many other forms, and the scope of the present disclosure should not be construed as being limited to the following examples. The examples of the present disclosure are provided to fully explain the present disclosure to those having ordinary knowledge in the technical field to which the present disclosure pertains.

Example 1: Manufacture of secondary battery

<Manufacture of negative electrode>

10 parts by weight of silicon oxide (SiO) and 50 parts by weight of natural graphite as a first negative electrode active material, 0.1 parts by weight of CNT as a first conductive material, and 1.4 parts by weight of styrene butadiene rubber (SBR) as a first binder polymer are mixed together, and water is added to prepare a lower layer slurry.

10 parts by weight of silicon oxide (SiO) and 50 parts by weight of artificial graphiteas a second negative electrode active material, 0.1 parts by weight of CNT as a second conductive material, and 0.7 parts by weight of core-shell particles as a second binder polymer are mixed together, and water is added to prepare an upper layer slurry.

The artificial graphite comprises a carbon coating layer on secondary particles formed by agglomeration of artificial graphite primary particles. In this instance, the D50 of the primary particles is 10,um, and the D50 of the first negative electrode active material is 20,um, wherein the second negative electrode active material is secondary particle type artificial graphite formed by agglomeration of the primary particles. The carbon coating layer on the secondary particles in the second negative electrode active material is included in an amount of 4.0 weight% based on the total weight of the second negative electrode active material. In this instance, the D50 of the second negative electrode active material is 21μm.

Additionally, the core-shell particle comprises a core of styrene butadiene rubber and a shell of an acrylic copolymer around the core.

Subsequently, the lower layer slurry is coated on two surfaces of a negative electrode current collector, for example, a copper (Cu) foil having the thickness of 10μm in a loading amount of 2.5 mAh/cm$^2$ using a double slot die, and the upper layer slurry is coated on the coated lower layer slurry in a loading amount of 2.5 mAh/cm$^2$consecutively (without a time interval). In this instance, the coating speed for each of the lower layer slurry and the upper layer slurry is 30m/min. Subsequently, the current collector coated with the slurries is dried at 80°C for 20 min to remove water from the slurries, followed by rolling of the dried slurry layer, and vacuum drying at about 130°C for 8 hours, to manufacture a negative electrode.

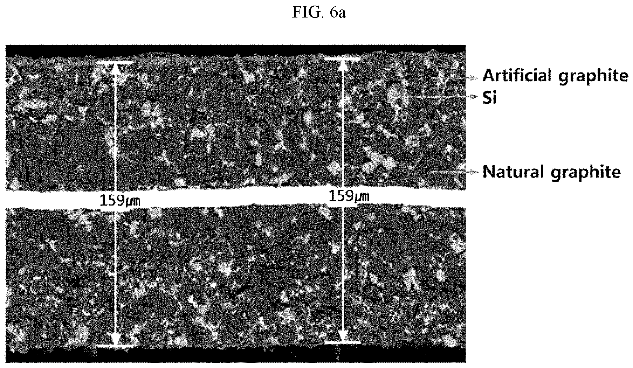

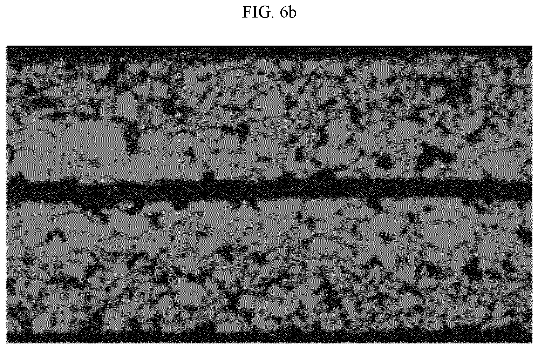

FIGS. 6a and 6b show SEM images of the negative electrode. Referring to FIGS. 6a and 6b, it can be seen that each negative electrode active material layer having the thickness of about 70μm and about 79μm is formed on each of the two surfaces of the 10μm thick current collector (total thickness: 159μm). In addition, as a result of observing the 70μm thick active material layer, its porosity is 30%, and the active material layer has a 25μm thick upper layer area(artificial graphite+silicon oxide distributed layer), a 20μm thick intermix area(artificial graphite and natural graphite mixed layer+silicon oxide) and a 25μm thick lower layer area(natural graphite+silicon oxide distributed layer).

<Manufacture of positive electrode>

97 parts by weight of $Li[Ni_{0.86}Mn_{0.05}Co_{0.07}]Al_{0.2}O_2$ having the Ni content of 86 mol% in the total transition metal as a positive electrode active material, 1.4 parts by weight of polyvinylidene fluoride (PVdF) as a binder polymer, and 0.4 parts by weight of CNT as a conductive material are mixed with N-methylpyrrolidone (NMP), and coated on 20 μm thick Al foil in a loading amount of 5 mAh/cm$^2$, followed by vacuum drying at about 130°C for 8 hours and rolling to the porosity of 30%, to manufacture a positive electrode.

<Manufacture of lithium secondary battery>

1.0M $LiPF_6$ is dissolved in a mixed organic solvent comprising ethylene carbonate (EC), propylene carbonate (PC) and diethyl carbonate (DEC) at 3:3:4 (volume ratio) to prepare a non-aqueous electrolyte solution.

An electrode assembly comprising a porous polyethylene separator between the manufactured positive and negative electrodes is placed in a cylindrical case, and the electrolyte solution is injected to manufacture a lithium secondary battery (a cylindrical battery). The form factor of the corresponding cylindrical battery is a 46800 cylindrical cell having the maximum diameter of 46mm and the maximum height of 80mm.

Comparative example 1: Manufacture of secondary battery

10 parts by weight of silicon oxide (SiO), 50 parts by weight of natural graphite and 50 parts by weight of artificial graphite as a first negative electrode active material, 0.1 parts by weight of CNT as a conductive material, and 1.2 parts by weight of styrene butadiene rubber (SBR) as a binder polymer are mixed together, and water is added to prepare a slurry.

The artificial graphite comprises a carbon coating layer on secondary particles formed by agglomeration of artificial graphite primary particles. In this instance, the D50 of the primary particles is 10μm, and the D50 of the first negative electrode active material is 20μm, wherein the first negative electrode active material is secondary particle type artificial graphite formed by agglomeration of the primary particles. The carbon coating layer on the secondary particles in the second negative electrode active material is included in an amount of 4.0 weight% based on the total weight of the second negative electrode active material. In this instance, the D50 of the second negative electrode active material is 21μm.

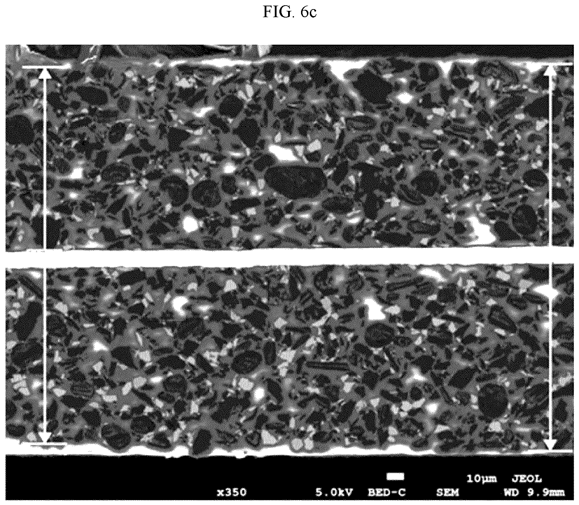

The slurry is coated on two surfaces of a 10μm thick negative electrode the current collector, for example, a copper (Cu) foil in a loading amount of 5mAh/cm$^2$. In this instance, the coating rate of the slurry is 30m/min. The current collector coated with the slurry is dried under a vacuum at about 130°C for 8 hours, and rolled to the porosity of 30% to manufacture a negative electrode of single-layered structure. FIG. 6c shows an SEM image of the negative electrode. Referring to FIG. 6c, it can be seen that the entire negative electrode active material layer formed on the two surfaces of the current collector only has an area in which natural graphite, artificial graphite and silicon oxide are mixed.

A positive electrode and a secondary battery (a cylindrical battery) are manufactured by the same method as example 1 except the negative electrode manufactured as described above is used.

Comparative example 2: Manufacture of secondary battery

10 parts by weight of silicon oxide (SiO), 50 parts by weight of natural graphite and 50 parts by weight of artificial graphite as a first negative electrode active material, 0.1 parts by weight of CNT as a conductive material, and 1.05 parts by weight of styrene butadiene rubber (SBR) as a binder polymer are mixed together, and water is added to prepare a slurry.

The artificial graphite comprises a carbon coating layer on secondary particles formed by agglomeration of artificial graphite primary particles. In this instance, the D50 of the primary particles is 10μm, and the D50 of the first negative electrode active material is 20μm, wherein the first negative electrode active material is secondary particle type artificial graphite formed by agglomeration of the primary particles. The carbon coating layer on the secondary particles in the second negative electrode active material is included in an amount of 4.0 weight% based on the total weight of the second negative electrode active material. In this instance, the D50 of the second negative electrode active material is 21μm.

Subsequently, the prepared slurry is coated on one surface of a negative electrode current collector, for example, a copper (Cu) foil having the thickness of 10μm in a loading amount of 2.5 mAh/cm² using a double slot die, and likewise, the prepared slurry is coated on the coated slurry in a loading amount of 2.5 mAh/cm². In this instance, the coating speed for each of the lower layer slurry and the upper layer slurry is 30 m/min. Subsequently, the current collector coated with the slurries is dried at 80°C for 20 min to remove water from the slurries, followed by rolling of the dried slurry layer and vacuum drying at about 130°C for 8 hours, to manufacture a negative electrode. In this instance, the manufactured negative electrode has the porosity of 30%, and comprises a negative electrode active material layer having the total thickness of 100 μm and a double layer structure of a 50 μm thick upper layer area and a 50 μm thick lower layer area.

A positive electrode and a secondary battery (a cylindrical battery) are manufactured by the same method as example 1 except the negative electrode manufactured as described above is used.

Characteristics evaluation of secondary battery and negative electrode

Experimental example 1: Evaluation of swelling characteristics

For each lithium secondary battery (a cylindrical battery) of example and comparative example, initial (first) charging/discharging is performed using an electrochemical charger/discharger. In this instance, charging is performed by applying an electric current up to 4.47V with the current density of 1.5 C-rate, and discharging is performed up to 3.0V with the same current density.

For each secondary battery having undergone 1 cycle charging/discharging, swelling characteristics are evaluated. In this instance, the swelling characteristics are calculated in percentage by determining a ratio of the changed diameter of the secondary battery after charging/discharging to the initial diameter of the secondary battery before charging/discharging as shown in the following equation.

Swelling (%) = [(diameter of secondary battery after charging/discharging) - (initial diameter of secondary battery)]/(initial diameter of secondary battery) X 100

The resultsare shown in the following Table 1. Additionally, the X-ray CT imaging results of the cylindrical secondary batteries of example 1 and comparative examples 1 and 2 are shown in FIGS. 1 to 3, respectively.

[Table 1]

|  | Example 1 | Comparative example 1 | Comparative example 2 |
|---|---|---|---|
| Swelling (%) | 9.30 | 12.40 | 11.60 |

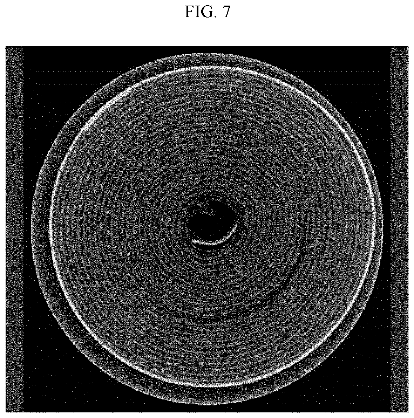

Referring to Table 1 and FIGS. 7 to 9, cracks occur due to swelling of the negative electrode after the completion of charge/discharge cycles, but it can be seen that the changed electrode structure of example reduces cracks in the core, thereby significantly reducing swelling. That is, in FIGS. 7 to 9, the middle part is the center of the jelly roll (the winding core is removed), and the cylindrical secondary batteries of comparative examples 1 and 2 using the negative electrode having only the single layer or double layer of the mixture of natural graphite and artificial graphite has deformation of the circular shape in the middle due to large swelling, but in the case of the cylindrical secondary battery (the natural graphite and the silicon-based compound distributed in the lower layer area, the natural graphite, the artificial graphite and the silicon-based compound distributed in the intermix area and the artificial graphite and the silicon-based compound distributed in the upper layer area) of example 1, swelling is suppressed and the circular shape is maintained.

Additionally, FIGS. 7 to 9 are X-ray CT images of the cylindrical batteries of example 1 and comparative examples 1 and 2 after 1 cycle charging/discharging, respectively.

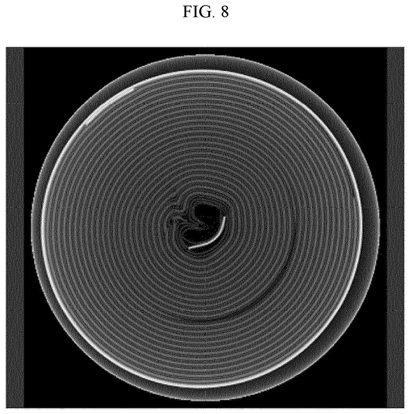

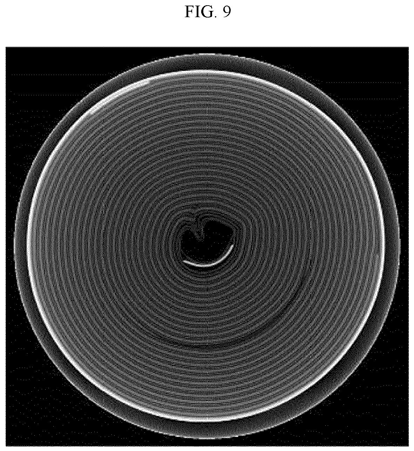

In FIGS. 7 to 9, the middle part is the center of the jelly roll of the cylindrical battery (the winding core is removed), and the cylindrical battery of example 1 in FIG. 7 maintains the circular shape due to the suppressed swelling, while the cylindrical batteries of comparative examples 1 and 2 in FIGS. 8 and 9 comprise only the intermix area in which artificial graphite and natural graphite are mixed in each negative electrode active material layer, and thus the circular shape in the middle of the jelly roll is deformed due to large swelling.

Experimental example 2: Evaluation of lithium plating

For each lithium secondary battery (a cylindrical battery) of example and comparative example, as a result of disassembling each lithium secondary battery after 1 cycle charging/discharging in the condition of experimental example 1, FIGS. 4 to 6 show photographic images of the negative electrode active material layer surface of each secondary battery and the negative electrode active material layer attached to the separator, respectively.

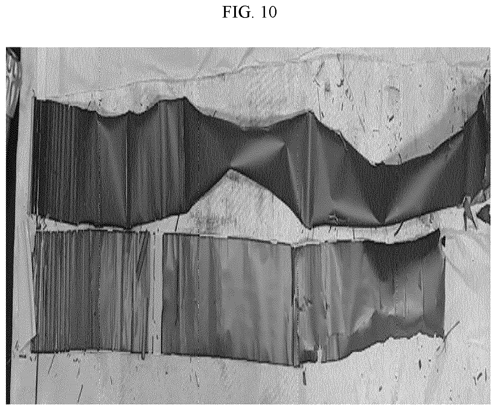

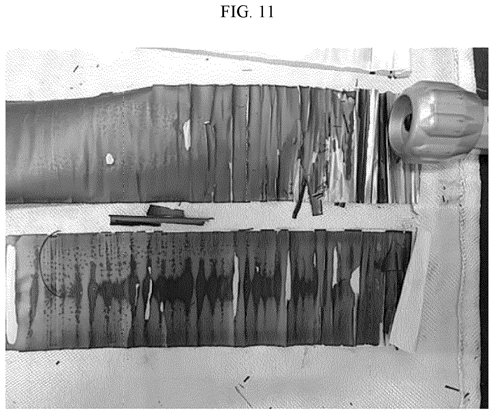

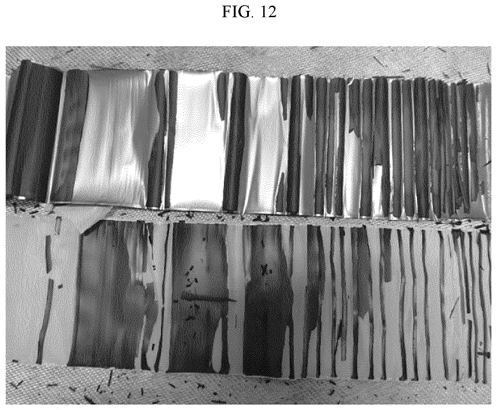

In FIGS. 10 to 12, the upper photographic image shows the negative electrode active material layer surface, and the lower photographic image shows the negative electrode active material layer attached to the separator. The secondary batteries of comparative examples 1 and 2 in FIGS. 11 and 12show lithium plating in black on the negative electrode active material layer surface and the negative electrode active material layer attached to the separator. In contrast, the secondary battery of example 1 in FIG. 10 does not show lithium plating.

Experimental example 3: Evaluation of fast charging characteristics

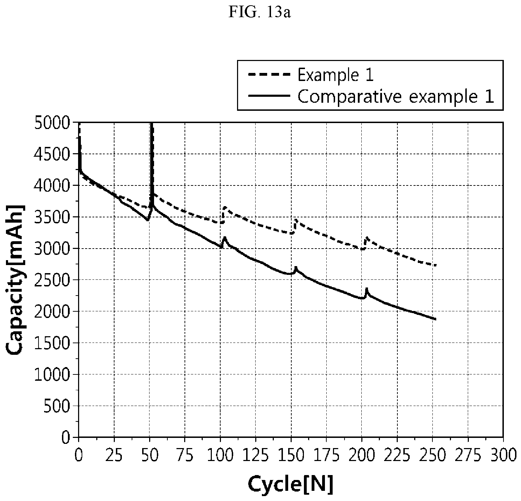

For each battery of example 1andcomparative example 1,a fast charging/discharging test is performed under the condition of 2.5C(4.1V,0.05C) / 0.5C(3.0V), and the test results are shown in FIGS. 13a to 13d.

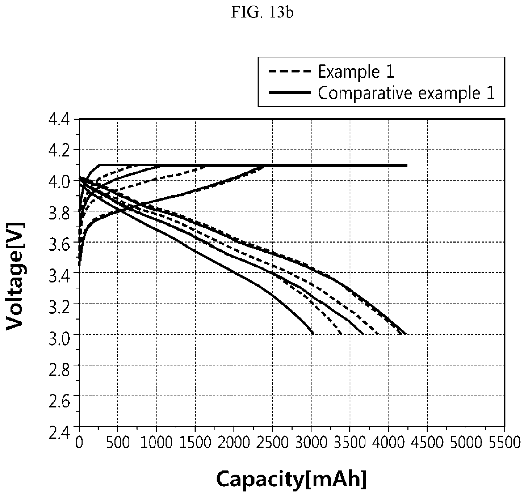

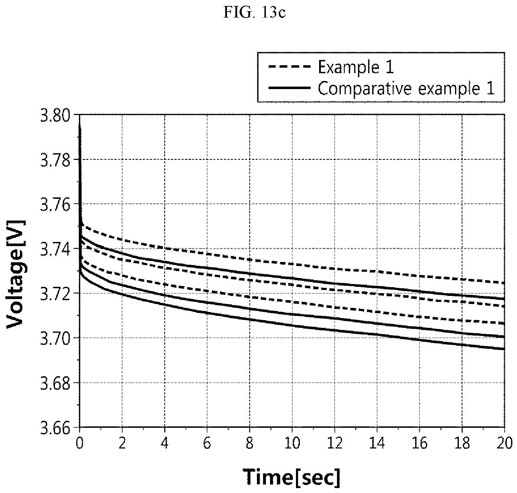

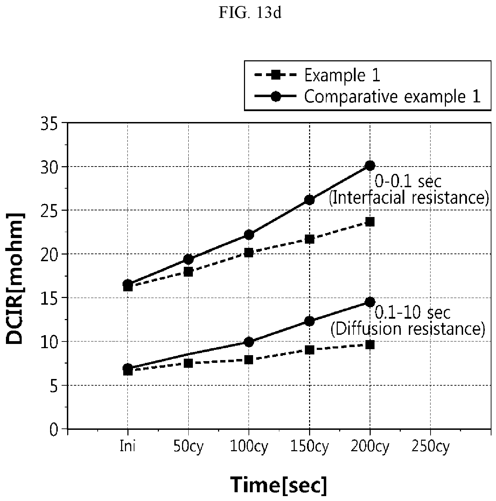

For reference, in FIGS. 13a to 13d, the solid line indicates the evaluation results of comparative example 1, and the dashed line indicates the evaluation results of example 1. Additionally, FIG. 13a shows changes in capacity characteristics by cycle during fast charging/discharging, and FIG. 13b shows 2.5C charging profile. In addition, FIGS. 13c and 13d are DCIR profiles showing changes in voltage and resistance with time during SOC 50% fast charging.

Referring to FIG. 13a, it is found that example 1 exhibits better capacity retention than comparative example 1 as a function of cycle number in the fast charging/discharging test. Additionally, referring to FIGS. 13c and 13d, it is confirmed that example 1mitigates overvoltage and suppresses the interfacial resistance rise with time compared to comparative example 1.

From this, it is confirmed that the battery of example 1 exhibits improved fast charging characteristics compared to comparative example 1.

Experimental example 4: Evaluation of distribution characteristics (QBR) of binder polymer of negative electrode

The negative electrode manufactured in example 1is prepared in 1cm X 1cm size and placed in the container that holds $OsO_4$(osmium tetraoxide), the container is sealed up, and the negative electrode is taken out of the container after 3hours, placed in a vacuum oven and dried for48 hours to stain the binder polymer included in the negative electrode active material layer using $OsO_4$. In this instance, the negative electrode has the negative electrode active material layer coated on two surfaces of the current collector, and the negative electrode active material layer on the upper surface of the current collector is referred to as a first negative electrode active material layer, and the negative electrode active material layer on the lower surface of the current collector is referred to as a second negative electrode active material layer.

Subsequently, a cross section of the stained negative electrode is prepared using Ar ion milling. Subsequently, EDS mapping is performed to measure the constituent elements in the first and second negative electrode active material layers of the negative electrode cross section is performed using an EDS detector of SEM equipment.

In the EDS mapping results, a line profile(line profile) is extracted in the thickness-wise direction of the first and second negative electrode active material layers, and the average value (Bs) of Os atomic ratio of the Os stained binder polymer in the surface area of the first and second negative electrode active material layers and the average value (Bf) of Os atomic ratio of the Os stained binder polymer in the bottom area of the first and second negative electrode active material layers are extracted from the extracted line profile results, and the QBR value is calculated using the following equation and the results are shown in Table 2.

$$QBR = Bs/Bf$$

In this instance, the surface area of the first and second negative electrode active material layers is an area within 15% of the total thickness of the first and second negative electrode active material layers from the outermost surface of the first and second negative electrode active material layers in the thickness-wise direction, and the bottom area of the first and second negative electrode active material layers is an areawithin15% of the total thickness of the first and second negative electrode active material layers from the interface of the first and second negative electrode active material layers in contact with the current collector.

[Table 2]

|  | Bs | Bf | QBR |
|---|---|---|---|
| First negative electrode active material layer | 1.02 | 0.63 | 1.62 |
| Second negative electrode active material layer | 1.31 | 0.82 | 1.60 |

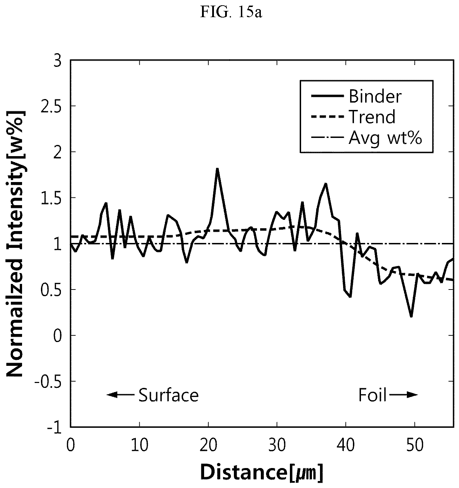

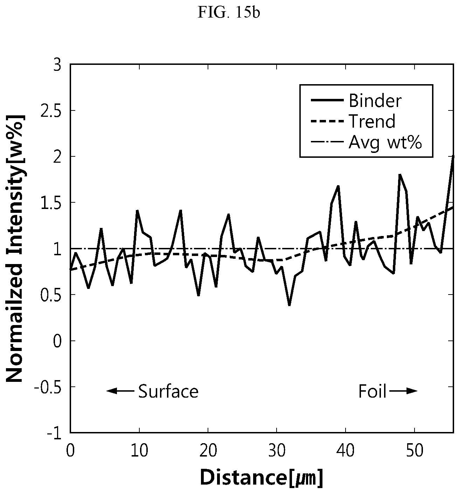

FIG. 15a is a graph showing changes in normalized intensity of the stained Os in the binder polymer of the first negative electrode active material layer extracted and analyzed from the EDS mapping at the distance in the direction from the surface of the first negative electrode active material layer toward the current collector in the negative electrode of example 1. FIG. 15b is a graph showing changes in normalized intensity of the stained Os in the binder polymer of the second negative electrode active material layer extracted and analyzed from the EDS mapping at the distance in the direction from the surface of the second negative electrode active material layer toward the current collector in the negative electrode of example 1.

In FIGS. 15a and 15b, the binder line shows the intensity in each depth-wise direction when the total Os in the actually measured Os stained binder polymer is normalized to 1, the trend line is a trend line showing the trend of the binder line and is a smooth line by LOWESS smoothing, i.e., Locally-Weighted Scatterplot Smoother, and the Avg wt% line is a line that always shows the value of 1.

[Description of Reference Numerals]

5: Vehicle
3: B attery pack
2: Pack housing
1: Cylindrical secondary battery
10: Electrode assembly
11, 12: Electrode (positive electrode, negative electrode) tab
13: Positive electrode
14: Negative electrode
15: Separator
16: Uncoated portion
17: Current collector
18: Active material layer
20: Battery can
30: Cap plate
40: Penetrating terminal
50: Insulationgasket
60: First current collector plate
70: Insulator
80: Second current collector plate

**Claims**

1. A cylindrical secondary battery, comprising:

an electrode assembly of a jelly-roll shape in which a positive electrode comprising a current collector and a positive electrode active material layer on the current collector and a negative electrode comprising a current collector and a negative electrode active material layer on the current collector are wound with a separator interposed between the positive electrode and the negative electrode; and
a battery can accommodating the electrode assembly,
wherein the negative electrode active material layer includes:

a lower layer area in contact with the current collector and comprising a silicon-based compound and natural graphite as an active material,

an intermix area in contact with the lower layer area, and comprising a silicon-based compound, natural graphite and artificial graphite as an active material, and
an upper layer area in contact with the intermix area, and comprising a silicon-based compound and artificial graphite as an active material, and
wherein a diameter is 35mm or more and a height is 75mm or more based on a maximum diameter and a maximum height of the battery can.

2. The cylindrical secondary battery according to claim 1, wherein the positive electrode active material layer comprises lithium nickel-based transition metal oxide having a nickel content of 80 to 100 mol% based on a total transition metal content as an active material.

3. The cylindrical secondary battery according to claim 2, wherein the lithium nickel-based transition metal oxide is represented by the following Formula 1:

$$[\text{Formula 1}] \qquad Li_{1+a}(Ni_bCo_cMn_dAl_eM_f)O_2$$

wherein in the Formula 1, $-0.1 < a < 0.2$, $0.8 \leq b \leq 1.0$, $0.01 \leq c \leq 0.15$, $0.01 \leq d \leq 0.15$, $0.01 \leq e \leq 0.1$, $0 \leq f \leq 0.05$, M is at least one selected from the group consisting of Mg, Ti, Zr, Nb and W.

4. The cylindrical secondary battery according to claim 1, wherein the negative electrode active material layer has a thickness of 40 to 200,um.

5. The cylindrical secondary battery according to claim 1, wherein the intermix area has a thickness of 20 to 80% of a total thickness of the negative electrode active material layer based on a cross-sectional thickness at which the intermix area is formed with a largest thickness in the negative electrode active material layer.

6. The cylindrical secondary battery according to claim 5, wherein the lower layer area has a thickness of 10 to 50% of the total thickness of the negative electrode active material layer based on the cross-sectional thickness at which the intermix area is formed with a largest thickness in the negative electrode active material layer.

7. The cylindrical secondary battery according to claim 5, wherein the upper layer area has a thickness of 10 to 50% of the total thickness of the negative electrode active material layer based on the cross-sectional thickness at which the intermix area is formed with a largest thickness in the negative electrode active material layer.

8. The cylindrical secondary battery according to claim 1, wherein the intermix area comprises the natural graphite and the artificial graphite at a weight ratio of 2 : 8 to 8 : 2.

9. The cylindrical secondary battery according to claim 1, wherein the intermix area has such an active material distribution gradient that a distribution ratio of the natural graphite decreases and a distribution ratio of the artificial graphite increases as it is closer to the upper layer area.

10. The cylindrical secondary battery according to claim 1, wherein the natural graphite has a particulate shape exhibiting a sphericity of more than 0.91 and an average particle size (D50) of 5 to $30\mu$m.

11. The cylindrical secondary battery according to claim 1, wherein the artificial graphite comprises secondary particles formed by agglomeration of primary particles and a carbon coating layer formed on surfaces of the secondary particles.

12. The cylindrical secondary battery according to claim 11, wherein the carbon coating layer is included in an amount of 0.5 to 10 weight% based on a total weight of the artificial graphite.

13. The cylindrical secondary battery according to claim 11, wherein the artificial graphite has an average particle size (D50) of 4 to $32\mu$m.

14. The cylindrical secondary battery according to claim 1, wherein the silicon-based compound comprises at least one of Si, SiOx where $0 < x \leq 2$ or Si-Y alloy where the Y is an element selected from the group consisting of alkali metals, alkali earth metals, Group 13 elements, Group 14 element except Si, transition metals, rare earth elements and a combination thereof.

**15.** The cylindrical secondary battery according to claim 1, wherein the silicon-based compound is included in an amount of 10 to 50 weight% based on a total amount of the active materials included in the negative electrode active material layer.

**16.** The cylindrical secondary battery according to claim 1, wherein each of the lower layer area, the intermix area and the upper layer area comprises the active material, a binder polymer and a conductive material, and
wherein the lower layer area comprises the binder polymer of higher content (weight%) than the upper layer area based on a total content (weight%) of each area.

**17.** The cylindrical secondary battery according to claim 16, wherein the lower layer area comprises 1 to 1.2 weight% of the binder polymer based on the total content (weight%), and
wherein the upper layer area comprises 0.5 to 0.9 weight% of the binder polymer based on the total content (weight%).

**18.** The cylindrical secondary battery according to claim 16, wherein the binder polymer of the lower layer area comprises styrene butadiene rubber (SBR), or a mixture of styrene butadiene rubber (SBR) and an acrylic copolymer.

**19.** The cylindrical secondary battery according to claim 18, wherein the binder polymer of the lower layer area comprises the mixture of the styrene butadiene rubber (SBR) and the acrylic copolymer, and
wherein the styrene butadiene rubber is included in a larger amount than the acrylic copolymer.

**20.** The cylindrical secondary battery according to claim 16, wherein the binder polymer of the upper layer area comprises core-shell particles comprising a core of styrene butadiene rubber, and a shell of an acrylic copolymer around the core; or a mixture of the core-shell particles and styrene butadiene rubber.

**21.** The cylindrical secondary battery according to claim 20, wherein the binder polymer of the upper layer area comprises the mixture of the core-shell particles and the styrene butadiene rubber, and
wherein the core-shell particles are included in a larger amount than the styrene butadiene rubber.

**22.** The cylindrical secondary battery according to claim 20, wherein an average particles size (D50) of the core-shell particles is 30 to 100 nm, and an average particle size of the styrene butadiene rubber is 200 to 350 nm.

**23.** The cylindrical secondary battery according to claim 1, wherein the negative electrode active material layer has a QBR(Quantified Binder Ratio) of 2.0 or less, and

wherein the QBR is defined by the following equation:

$$QBR = Bs/Bf$$

wherein Bs denotes an average value of Os atomic ratio in a negative electrode active material layer surface area within 15% of a total thickness of the negative electrode active material layer from an outermost surface of the negative electrode active material layer, and Bf denotes an average value of Os atomic ratio in a negative electrode active material layer bottom area within 15% of the total thickness of the negative electrode active material layer from a negative electrode active material layer interface in contact with the current collector, and
wherein the Os atomic ratio is analyzed by Energy Dispersive X-ray Spectroscopy (EDS) after $OsO_4$ staining of a cross section of the negative electrode active material.

**24.** The cylindrical secondary battery according to claim 1, wherein the positive electrode and the negative electrode have an uncoated portion in which the active material layer is not formed along one side end of the current collector in a direction parallel to a winding direction, and
wherein at least part of the current collector of the uncoated portion defines an electrode tab.

**25.** The cylindrical secondary battery according to claim 24, wherein the at least part of the current collector defining the electrode tab is processed into a plurality of segments which is independently bendable.

**26.** The cylindrical secondary battery according to claim 1, wherein a ratio of a form factor defined as a value obtained by dividing a diameter by a height is larger than 0.4.

27. The cylindrical secondary battery according to claim 26, wherein the cylindrical secondary battery is a 46110 cell, a 48750 cell, a 48110 cell, a 48800 cell or a 46800 cell.

28. A battery pack comprising the cylindrical secondary battery according to any one of claims 1 to 27.

29. A vehicle comprising the battery pack according to claim 28.

FIG. 1

FIG. 2

10

Winding direction

13    14    15

FIG. 3

FIG. 4

FIG. 5

FIG. 6a

FIG. 6b

FIG. 6c

FIG. 7

FIG. 8

FIG. 9

FIG. 10

FIG. 11

FIG. 12

FIG. 13a

FIG. 13b

FIG. 13c

FIG. 13d

FIG. 14

FIG. 15a

FIG. 15b

<div align="center">

**INTERNATIONAL SEARCH REPORT**

</div>

| International application No. |
|---|
| **PCT/KR2022/016210** |

| A. | CLASSIFICATION OF SUBJECT MATTER |
|---|---|

**H01M 4/131**(2010.01)i; **H01M 4/133**(2010.01)i; **H01M 4/36**(2006.01)i; **H01M 4/48**(2010.01)i; **H01M 4/38**(2006.01)i; **H01M 4/525**(2010.01)i; **H01M 4/505**(2010.01)i; **H01M 10/0587**(2010.01)i; **H01M 10/052**(2010.01)i; **H01M 4/62**(2006.01)i

According to International Patent Classification (IPC) or to both national classification and IPC

| B. | FIELDS SEARCHED |
|---|---|

Minimum documentation searched (classification system followed by classification symbols)

H01M 4/131(2010.01); H01M 10/04(2006.01); H01M 10/05(2010.01); H01M 10/0525(2010.01); H01M 2/02(2006.01); H01M 2/16(2006.01); H01M 4/13(2010.01); H01M 4/133(2010.01); H01M 4/38(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 원통형 (cylinderical), 이차전지 (secondary battery), 천연 흑연 (natural graphite), 젤리롤 (jelly-roll), 인조 흑연 (artificial graphite), 평균입경 (median diameter), 폼팩터 (form factor)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 10424779 B1 (GOOGLE LLC) 24 September 2019 (2019-09-24)<br>See abstract; column 3, lines 15-18, lines 46-53 and lines 61-62; column 4, lines 8-21 and column 6, lines 49-51 and line 62 - column 7, line 8; and figures 1A, 1B and 3D. | 1-29 |
| Y | KR 10-2018-0023820 A (LG CHEM, LTD.) 07 March 2018 (2018-03-07)<br>See abstract; paragraphs [0017]-[0018], [0026] and [0048]-[0049]; and claims 1-6. | 1-29 |
| Y | KR 10-2014-0138057 A (LG CHEM, LTD.) 03 December 2014 (2014-12-03)<br>See abstract; paragraph [0029]; and claim 1. | 18-22 |
| Y | KR 10-1743136 B1 (LG CHEM, LTD.) 02 June 2017 (2017-06-02)<br>See abstract; paragraphs [0024] and [0028]; and figures 1d-1c. | 24-25 |
| A | KR 10-2019-0033214 A (SK INNOVATION CO., LTD.) 29 March 2019 (2019-03-29)<br>See entire document. | 1-29 |

| ☐ Further documents are listed in the continuation of Box C. | ☑ See patent family annex. |
|---|---|

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 January 2023** | **27 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center">**INTERNATIONAL SEARCH REPORT**<br>**Information on patent family members**</td><td colspan="2">International application No.<br><br>**PCT/KR2022/016210**</td></tr>
<tr><td>Patent document<br>cited in search report</td><td>Publication date<br>(day/month/year)</td><td>Patent family member(s)</td><td>Publication date<br>(day/month/year)</td></tr>
<tr><td>US 10424779 B1</td><td>24 September 2019</td><td>None</td><td></td></tr>
<tr><td>KR 10-2018-0023820 A</td><td>07 March 2018</td><td>CN 107785535 A<br>CN 107785535 B<br>KR 10-1986626 B1<br>US 10454096 B2<br>US 2018-0062158 A1</td><td>09 March 2018<br>29 December 2020<br>30 September 2019<br>22 October 2019<br>01 March 2018</td></tr>
<tr><td>KR 10-2014-0138057 A</td><td>03 December 2014</td><td>CN 104981927 A<br>CN 104981927 B<br>EP 3001487 A1<br>EP 3001487 B1<br>KR 10-1597745 B1<br>US 10044041 B2<br>US 2016-0156038 A1<br>WO 2014-189294 A1</td><td>14 October 2015<br>08 June 2018<br>30 March 2016<br>18 October 2017<br>25 February 2016<br>07 August 2018<br>02 June 2016<br>27 November 2014</td></tr>
<tr><td>KR 10-1743136 B1</td><td>02 June 2017</td><td>KR 10-2016-0009406 A</td><td>26 January 2016</td></tr>
<tr><td>KR 10-2019-0033214 A</td><td>29 March 2019</td><td>KR 10-2405902 B1</td><td>08 June 2022</td></tr>
</table>

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210142208

- KR 1020210179523